# EUROPÄISCHE PATENTSCHRIFT

(11) **EP 0 595 028 B1**
(45) Veröffentlichungstag und Bekanntmachung des Hinweises auf die Patenterteilung: **16.07.1997**
(21) Anmeldenummer: 93115409.0
(22) Anmeldetag: 24.09.1993
(51) Int. Cl.: G01V 3/08, G01V 3/02

(54) **Geophysikalisches Verfahren zur Überwachung eines Gebiets**
Geophysical method for monitoring an area
Procédé géophysique de surveillance d'un terrain

(30) Priorität: 26.10.1992 DE 4235963
(43) Veröffentlichungstag der Anmeldung: 04.05.1994
(73) Patentinhaber: Prakla-Seismos GmbH, 30655 Hannover (DE)
(72) Erfinder: Korbmacher, Wolfgang, D-30900 Wedemark (DE); Scharf, Uwe, Dr., D-71067 Sindelfingen (DE)
(74) Vertreter: Meyer, Ludgerus A., Dipl.-Ing.

(56) Entgegenhaltungen:
- EP-A- 0 477 167
- WO-A-90/05923
- DE-C- 962 105

## Beschreibung

Die Erfindung betrifft ein geophysikalisches Verfahren zur Überwachung eines Gebietes nach dem Oberbegriff des Anspruchs 1.

Es ist seit längerem bekannt, an der Oberfläche eines zu überwachenden Gebietes Potentiale zu ermitteln, die Hinweise auf Stärke und Verlauf von unterirdischen Störungen, insbesondere dynamische Änderungen, ergeben. Hierzu ist es beispielsweise bekannt, hohe Ströme in den Untergrund zu leiten und die Potentiale im Umkreis von der Stromeinleitungsstelle aufeinanderfolgend zu ermitteln. Es ist ferner bekannt, Eigenpotentiale in Bezug auf eine Basissonde zu ermitteln.

Die Ermittlung der Potentiale kann insbesondere bei dynamischen Untergrundänderungen, wie z. B. bei der künstlichen Fracerzeugung, gute Ergebnisse liefern. Während des Brechens des Gesteins durch hydraulischen Druck entstehen seismische oder seismisch-akustische Ereignisse und elektrische Leitfähigkeitsänderungen. Insbesondere werden Filtrationspotentiale und Potentiale auf Grund geochemischer Änderung der Bohrspülung infolge der Flüssigkeits- oder Dampfinjektion in die Gebirgsformation unter hohem Druck und in einer kurzen Zeit erzeugt. Im Zusammenhang damit wird ein Elektrolyt durch die Gesteinskapillare gepreßt, die wie ein Diaphragma wirkt. Die originär an der Grenzfläche fest/flüssig existierende elektrochemische Doppelschicht wird folglich in einen stationären adhäsiven und einen instationären diffusiven Teil zerlegt. Als Resultat ergibt sich eine Potentialdifferenz infolge der sich zwischen den Enden der Kapilllaren befindlichen elektrischen Ladungen.

Die an der Oberfläche zu messenden Potentiale sind allerdings sehr klein. Als Störsignale treten insbesondere natürlich und künstlich erzeugte tellurische Ströme auf, die beispielsweise von Industrie- oder Bahnanlagen herrühren und deren Amplituden über der Größenordnung der zu messenden Potentialdifferenzen liegen. Die bekannten Verfahren sind daher nur in begrenztem Maße zur Feststellung von Zustandsänderungen des Untergrundes einsetzbar.

Aus der EP-A-477 167 ist ein Verfahren zur Überwachung eines Gebietes bekannt, bei welchem mittels Sonden an mehreren Meßstellen des Gebietes das Potential gemessen und in elektrische Signale umgesetzt wird, wobei die Signale in vorbestimmten Zeitabständen von einer zentralen Rechnereinheit abgefragt und verarbeitet werden. Die Meßstellen sind dabei in vorbestimmten Abständen entlang einer das Gebiet einschließenden geschlossenen Linie angeordnet. Zusätzlich sind einige Meßstellen unterhalb des Gebietes vorgesehen. Mit Hilfe dieses bekannten Verfahrens können insbesondere Mülldeponien potentialmäßig erfaßt werden. Dieses Verfahren bezieht sich aber auf die Messung von Langzeitänderungen im Zustand einer Deponie. Es bezieht sich auf die Messung von Potentialunterschieden von einer Messung zur nächsten Messung, ohne Angabe über den absoluten Zustand des Gebietes machen zu können.

Aus der DE-C-962 105 ist ein Verfahren zum Auffinden und Erforschen nutzbarer Lagerstätten im Erdboden mit Hilfe von Eigenpotentialmessungen bekannt, wobei nach Messung des Eigenpotentials des zu untersuchenden Erdbodnes dort ein Stromleiter mit hohem, regelbarem Widerstand parallel zum Eingang des Potentialmeßgerätes zugeschaltet wird. Es wird der Wert des Widerstandes ermittelt, bei dem das Potential des Erdbodens bei eingeschaltetem Widerstand auf einen Bruchteil des ohne Stromaufnahme gemessenen Potentialswertes absinkt.

Auch aus der DE-C-392 189 ist ein Verfahren zur Ermittlung des Erdwiderstandes in Verbindung mit Potentialmessungen bekannt.

Die DE-A-35 29 466 beschreibt ein Verfahren zur Bestimmung von Grenzen von mit Kohlenwasserstoffen gefüllten unterirdischen Lagerstätten, bei denen Meßsonden in einem Raster angeordnet werden und Eigenpotentialverläufe festgestellt werden.

Aus der WO-A-90/05923 ist eine Einrichtung zur elektrischen Prospektion des Untergrundes bekannt, bei der Meßsonden zur Potentialmessung selektiv an eine Meß- und Auswerteinheit anschaltbar sind.

Der Erfindung liegt die Aufgabe zugrunde, ein Verfahren zur Überwachung eines Gebietes mit Hilfe einer Eigenpotentialmessung vorzusehen, bei dem der Einfluß tellurischer Ströme weitgehend ausgeschlossen ist und eine hohe Genauigkeit und Zuverlässigkeit der ermittelten Ergebnisse erzielbar ist.

Diese Aufgabe wird durch die im Anspruch 1 angegebene Erfindung gelöst. Vorteilhafte Weiterbildungen der Erfindung sind in abhängigen Ansprüchen angegeben.

Das erfindungsgemäße Verfahren zeichnet sich demnach dadurch aus, daß zusätzlich zur Ermittlung der Potentiale an den einzelnen Meßsonden unmittelbar vor oder nach einer Messung jeweils der Erdwiderstand zwischen der gleichen Meßsonde und Basissonde ermittelt wird. Zur Auswertung gelangt daher nicht allein der Wert des Eigenpotentials, sondern insbesondere der Wert der fließenden Ströme, der sich bei der Eigenpotentialmessung unter Berücksichtigung des Erdwiderstandes ergibt.

Vorzugsweise sind die Meßsonden in parallel zueinanderliegenden Gruppen entlang von Meßlinien angeordnet. In einem ausgeführten Beispiel enthält jede Gruppe 16 Meßsonden und es sind insgesamt 16 Gruppen vorhanden, so daß sich eine Gesamtzahl von 256 Meßsonden ergibt.

Insbesondere ist jeder Gruppe von Meßsonden eine Speichereinheit zugeordnet, in der die gleichzeitig erfaßten Potentialwerte der Meßsonden der zugehörigen Gruppe zwischengespeichert werden. Dabei werden alle Meßsonden des gesamten Rasters gleichzeitig abgefragt, so daß zu einem gleichen Zeitpunkt in jeder Speichereinheit 16 Meßwerte vorliegen, die zwischengespeichert werden. Diese zwischengespeicherten Werte werden dann zyklisch auf eine Zentraleinheit übertragen. Dies erlaubt die Feststellung des Zustandes des Potentials aller ausgelegten Meßsonden zu einem einzigen Zeitpunkt. Die Übertragung der Meßdaten an die Zentraleinheit kann dann zyklisch zwischen zwei aufeinanderfolgenden Messungen erfolgen.

Dadurch, daß vor oder nach jeder Messung der Eigenpotentiale eine Messung des Erdwiderstandes erfolgt, ergibt sich eine enge zeitliche Zuordnung der Potentialmessung zur Erdwiderstandsmessung. Die Messung des Erdwiderstandes erfolgt zwar nicht gleichzeitig mit der Messung des Eigenpotentials, jedoch sind die zeitlichen Änderungen des Erdwiderstandes in der Regel kleiner als die Änderungen der Potentialwerte innerhalb des betrachteten Zeitabschnittes.

Die Messung des Erdwiderstandes erfolgt ebenfalls mit Hilfe der Meßsonden, und die Ergebnisse werden in gleicher Weise wie die Potentialwerte auf die Speichereinheiten übertragen und zwischengespeichert. Sie können dann zyklisch an die Zentraleinheit übertragen werden. Um eine hohe Meßzykluszeit zu erreichen, kann auch vorgesehen sein, die Erdwiderstandsmessung erst nach einer größeren Zahl von Potentialmessungen vorzunehmen.

Vorzugsweise werden die ermittelten Eigenpotentiale der Meßsonden analog auf die zugehörigen Speichereinheiten einer Gruppe übertragen. Dadurch lassen sich Analog-Digital-Wandler an jeder einzelnen Sonde vermeiden. Ferner können in einer Speichereinheit zentrale Filter, beispielsweise Tiefpässe, eingesetzt werden. Die Filterung kann auch im Digitalbereich im Anschluß an die Zwischenspeicherung durchgeführt werden. Die Meßwerte der Erdwiderstandsmessung werden ebenfalls analog auf die zugehörige Speichereinheit übertragen und nach Analog-Digital-Wandlung zyklisch auf die Zentraleinheit übertragen. Die zyklische Übertragung der Eigenpotentialwerte bzw. Erdwiderstandwerte von den Speichereinheiten an die zentrale Einheit erfolgt vorzugsweise digital im Zeitmultiplexverfahren. Die Abfragezeit einer Gruppe von Meßsonden beträgt vorzugsweise 0,5 msec. Die zyklische Übertragung der Daten von den Speichereinheiten zur Zentraleinheit erfolgt in einer Zeit unterhalb von 10 sec, beispielsweise in 2 sec.

Zur Messung des Erdwiderstandes wird vorzugsweise eine Referenzspannung zwischen die Basissonde und die jeweiligen Meßsonden angelegt. Es wird dabei die an einem Meßwiderstand abfallende Spannung ermittelt und daraus der Erdwiderstand errechnet.

Die Meßsonden sind nichtpolarisierbare Sonden.

Zur Auswertung werden die ermittelten Eigenpotentiale mit dem ermittelten Erdwiderstand bewertet und in Form von Isolinien auf einer das Gebiet zeigenden Karte dargestellt. Hierbei kann insbesondere vorgesehen sein, daß zur Ausschaltung tellurischer Ströme nicht die absoluten Potentialwerte an den einzelnen Meßsonden verwendet werden, sondem Differenzpotentiale zwischen benachbarten Meßsonden.

Die Erfindung erlaubt die hochgenaue Feststellung der Eigenpotentialverteilung über einem Gebiet zu zeitlich präzise bestimmbaren Zeitpunkten unter weitgehender Ausschaltung von Störsignalen und Erdwiderstandsänderungen.

Die Erfindung wird nachstehend anhand eines Ausführungsbeispiels näher erläutert. Es zeigen:
Fig. 1 ein Schema einer Meßanordnung,
Fig. 2 eine Darstellung der verwendeten Meßausrüstung,
Fig. 3 eine Schnittansicht einer Meßsonde,
Fig. 4 eine Prinzipdarstellung einer Speichereinheit,
Fig. 5 eine Prinzipdarstellung der Erdwiderstandsmessung,
Fig. 6 A - H Ergebnisse einer Messung eines Fracvorgangs.

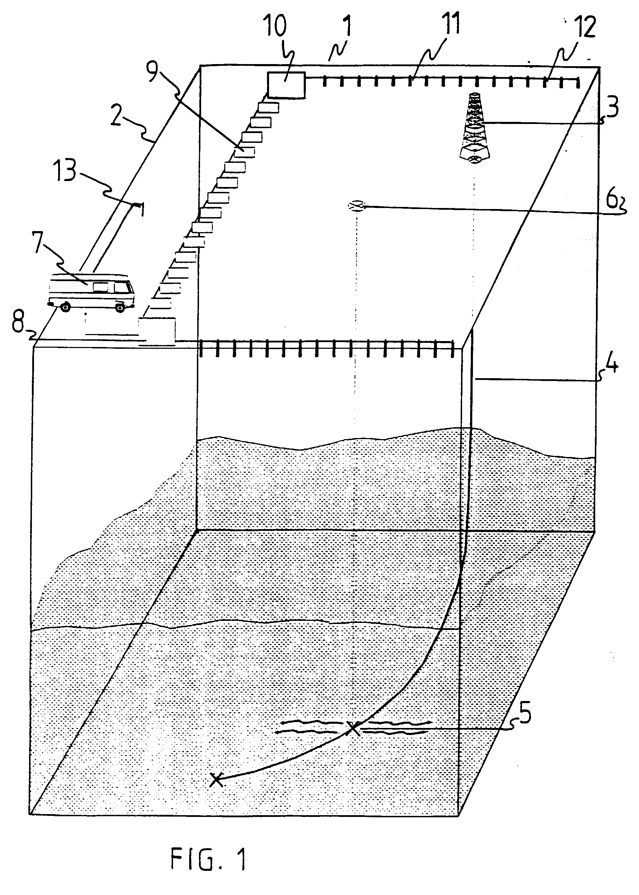

Fig. 1 zeigt ein Gebiet mit den Kanten 1, 2 mit einer oberirdisch angebrachten Meßanordnung. Von einem Bohrturm 3 führt ein Bohrstrang 4 in einen ölführenden Sandstein, in dem in einem Fracbereich 5 der Sandstein aufgebrochen werden soll. Mit der Ziffer 6 ist die vertikale Projektion des Fracpunktes an der Oberfläche angezeigt. In einem Meßwagen 7 ist eine zentrale Rechnersteuerung mit Zentraleinheit und Auswerteeinrichtungen untergebracht.

Entlang eines Telemetriekabels 9 sind 16 Speichereinheiten in gleichem Abstand zueinander angeordnet, wobei die erste Speichereinheit mit der Ziffer 8 und die letzte Speichereinheit mit der Ziffer 10 bezeichnet sind. An die Speichereinheit 10, und auch an jede anderen Speichereinheit, ist eine Leitung 11 angeschlossen, die zu den einzelnen Meßsonden 12 führt, wobei insgesamt 16 Sonden entlang der Leitung 11 angeordnet sind. Das gesamte Meßraster enthält daher 256 Sonden. Außerhalb des Meßrasters ist eine Basissonde 13 angeordnet, die ebenfalls mit dem Meßwagen verbunden ist.

Zur Erdwiderstandsmessung wird ein Strom zwischen Basissonde und einzelnen Meßsonden eingespeist, während die Potentialmessung zwischen Basissonde und Meßsonden ohne angelegte Fremdspannung durchgeführt wird.

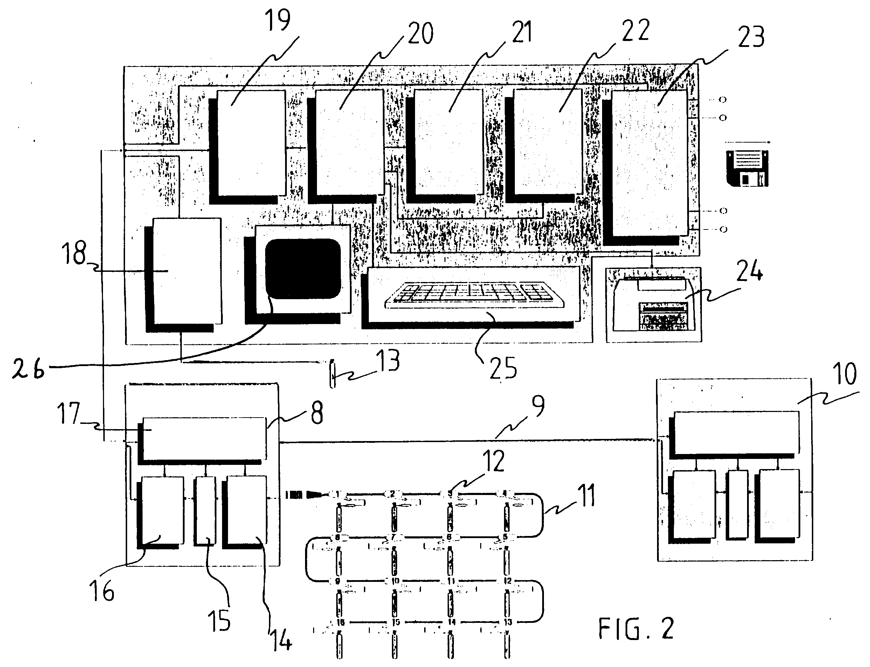

Fig. 2 zeigt ein verwendbares Rechnersystem. Es ist eine Leitung 11 dargestellt, an der 16 Meßsonden 12 angeschlossen sind. Die Leitung 11 führt auf eine Speichereinheit 8. Diese enthält insbesondere einen 16-Kanal-Vorverstärker mit analogem Filter 14, nachfolgend einen 12 Bit-Analog-Digital-Wandler 15, einen Mikroprozessor 16 und eine Stromversorgungseinheit 17. Die Signalfilterung erfolgt vorzugsweise im analogen Bereich, getrennt für jede einzelne Meßsonde. Es ist aber auch möglich, die Filterung zumindest teilweise am digitalen Signal vorzunehmen.

Die ermittelten Daten der 16 Meßsonden werden in der Speichereinheit 8 zwischengespeichert und stehen zur Abfrage von dem Zentralrechner bereit.

Im Zentralrechner ist eine Steuereinheit 18 zur Erdwiderstandsmessung vorgesehen. Ferner werden die von den Speichereinheiten 8 abgefragten Daten über einen RS232/485-Umsetzer 19 auf den Steuerrechner 20 übertragen und können auf eine Hard-Disk 21 gespeichert werden. Es sind femer eine Floppy-Disc 22 und eine Stromversorgungseinheit 23 vorgesehen. Die Ergebnisse der Messungen lassen sich auf einen Drucker 24 ausdrucken. Die Bedienung des Rechners erfolgt über eine Tastatur 25. Ferner ist ein Monitor 26 zur Darstellung von Meßergebnissen bzw. zur Steuerung des Rechners vorgesehen.

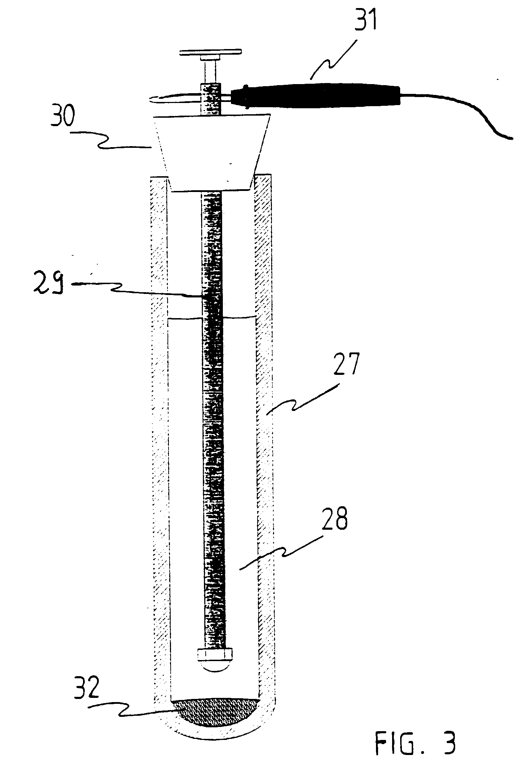

Fig. 3 zeigt eine verwendbare Meßsonde. Es ist ein hohles Keramikgehäuse 27 vorgesehen, das teilweise mit Kupfersulfatlösung 28 gefüllt ist. Am unteren Ende des Gehäuses ist ausgefallenes Kupfersulfat 32 vorhanden. In die Kupfersulfatlösung 28 ist ein Kupferstab 29 eingeführt, der am oberen Ende des Keramikgehäuses durch einen Gummistopfen 30 gehalten ist. Die Meßsonde ist über ein Anschlußkabel 31 mit der Leitung 11 verbunden.

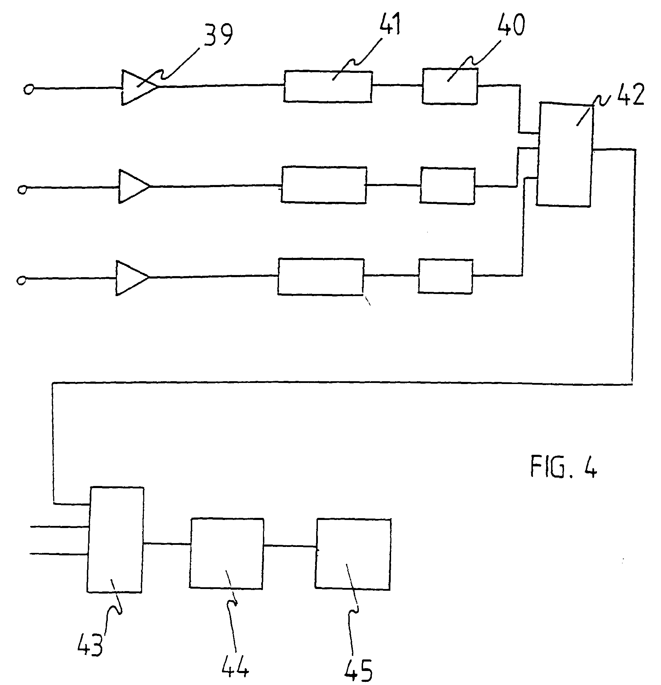

Fig. 4 zeigt eine Prinzipdarstellung einer Speichereinheit. Die einzelnen Meßsonden sind über eigene Vorverstärker 39 und Filter 41 mit einem Analog-Digitalwandler 40 verbunden. Die Ausgänge aller Analog-Digitalwandler einer Gruppe führen auf eine Sample & Hold-Speichereinheit 42, die die Daten zwischenspeichert. Von hier werden sie zyklisch über eine Multiplexabfrage 43 auf den Zentralrechner 44 überführt und auf der Anzeigeeinheit 45 dargestellt.

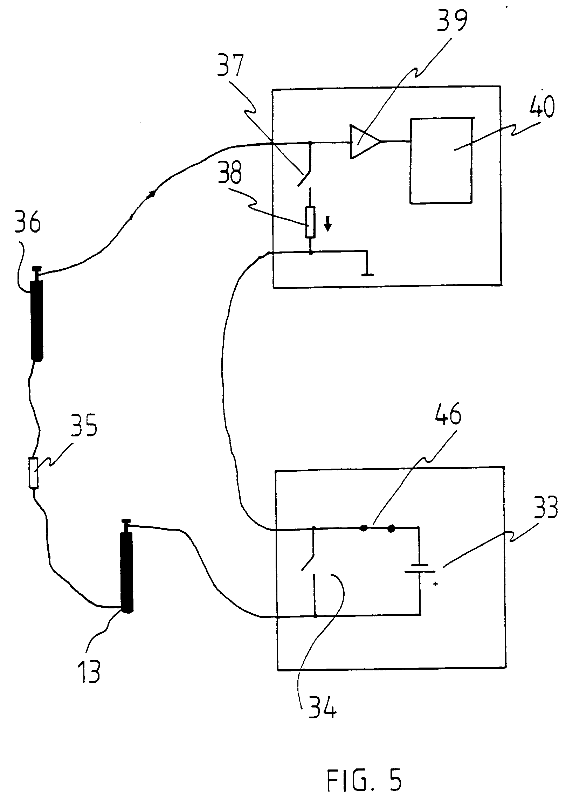

Fig. 5 zeigt das Prinzip der Erdwiderstandsmessung. Es ist eine Gleichspannungsquelle 33 vorgesehen, deren Stromkreis über die Basiselektrode 13, den Erdwiderstand 35, eine Meßsonde 36, einen Schalter 37 und einen Meßwiderstand 38 führt. Der Schalter 37 ist während der Erdwiderstandsmessung geschlossen. Die am Meßwiderstand 38 abfallende Spannung wird über den Verstärker 39 verstärkt und in gleicher Weise wie die Potential-Meßdaten der Sonde auf den Analog-Digitalwandler 40 geführt.

Während einer Messung der Potentiale an den Meßsonden ist der Schalter 34 geschlossen und der Schalter 46 geöffnet. Der Schalter 37 ist während einer Messung der Potentiale geöffnet. Zwischen dem Verstärkeranschluß des Verstärkers 39 und Masse wird auf diese Weise die Potentialdifferenz zwischen Basiselektrode 13 und Meßsonde 36 ermittelt.

Die ermittelten Potentiale können unmittelbar ausgewertet werden, es wird jedoch bevorzugt, Potentialdifferenzen zwischen benachbarten Sonden für die Auswertung zu verwenden, um tellurische Ströme im Untergrund aus der Messung zu eliminieren. Es wird dabei davon ausgegangen, daß die tellurischen Ströme im wesentlichen auf alle Meßsonden zum gleichen Zeitpunkt in gleicher Weise einwirken.

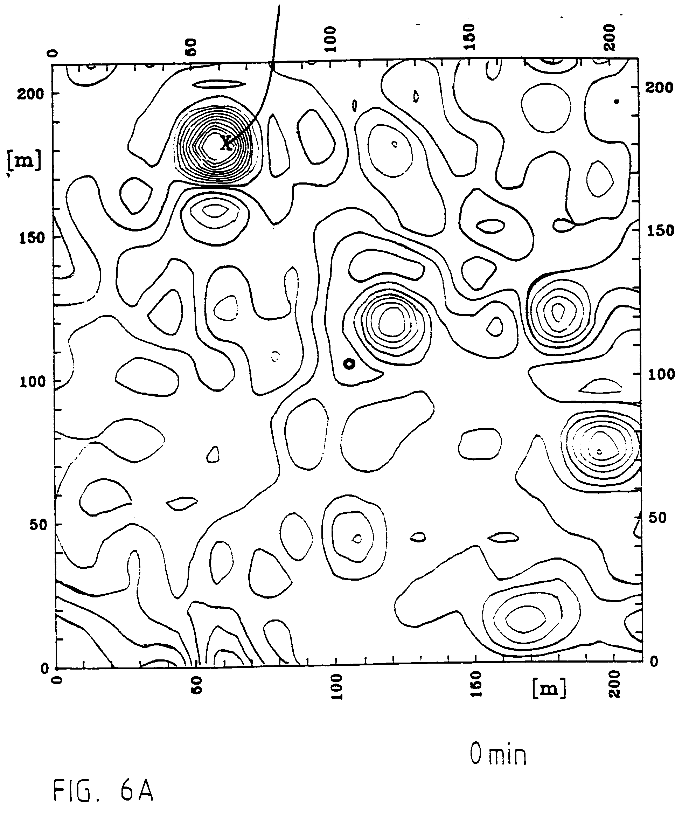

Fig. 6A zeigt die Darstellung eines Gebietes mit den Ausmaßen 200 x 200 m vor der Durchführung eines Fracvorgangs. An der Stelle 47 ist eine gestörte Sonde vorhanden. Die Darstellung zeigt keine Vorzugsverteilung der ermittelten Potentialwerte.

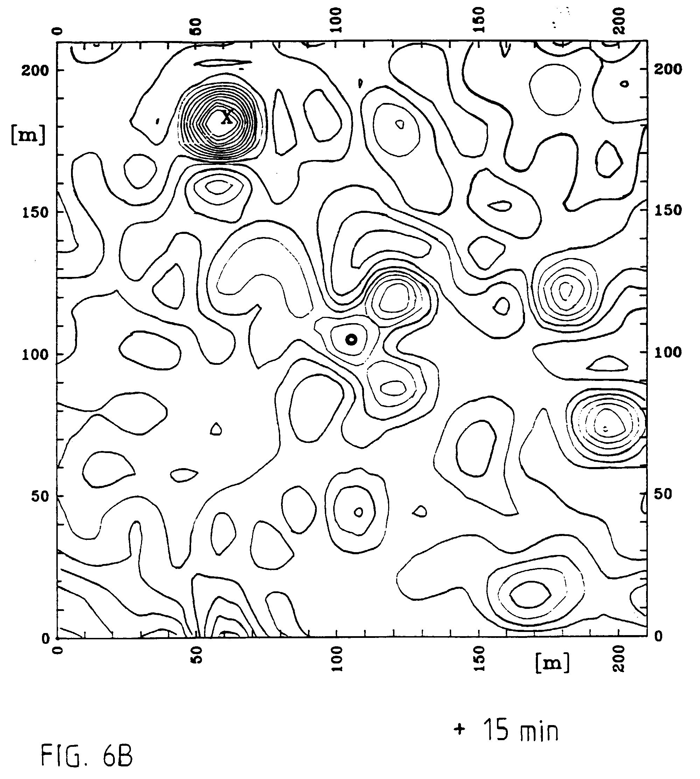

Fig. 6B zeigt den Zustand der Potentialverteilung etwa 15 Min. nach Einleitung des Fracvorgangs.

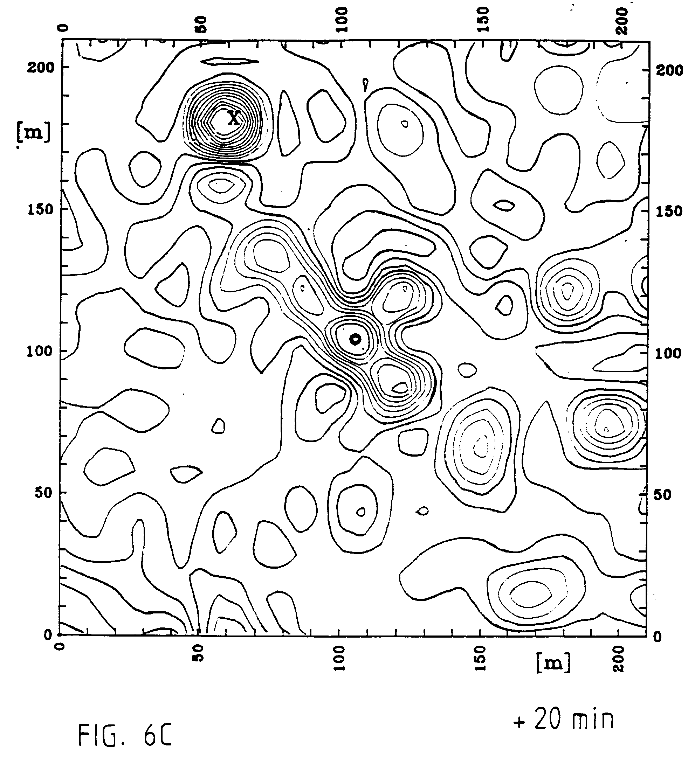

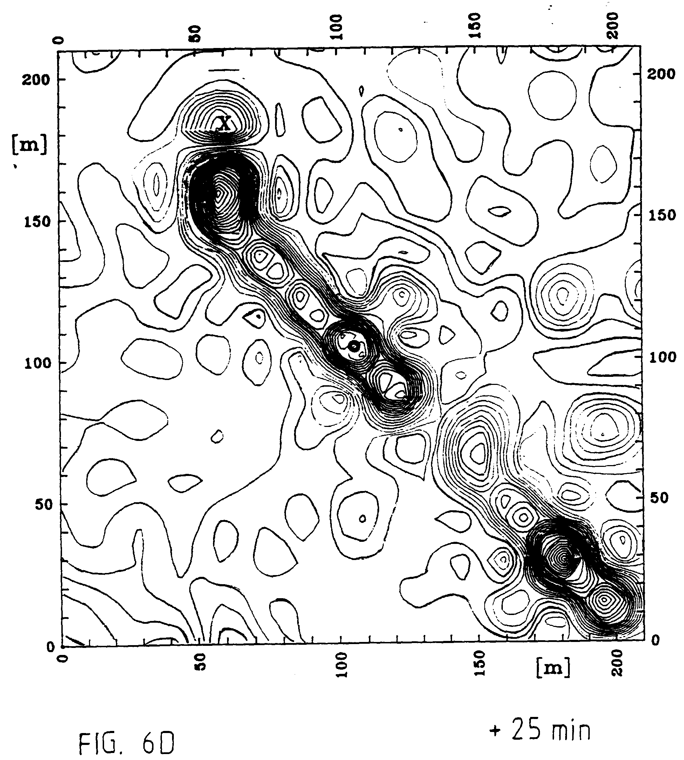

Fig. 6C zeigt den Zustand nach 20 Min., wobei bereits eine Ausrichtung von veränderten Potentialwerten von links oben nach rechts unten erkennbar wird.

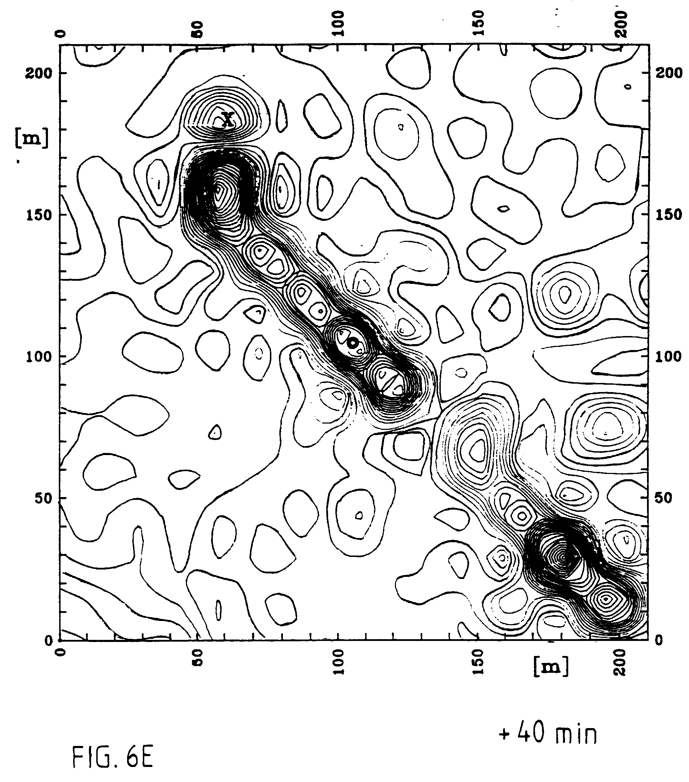

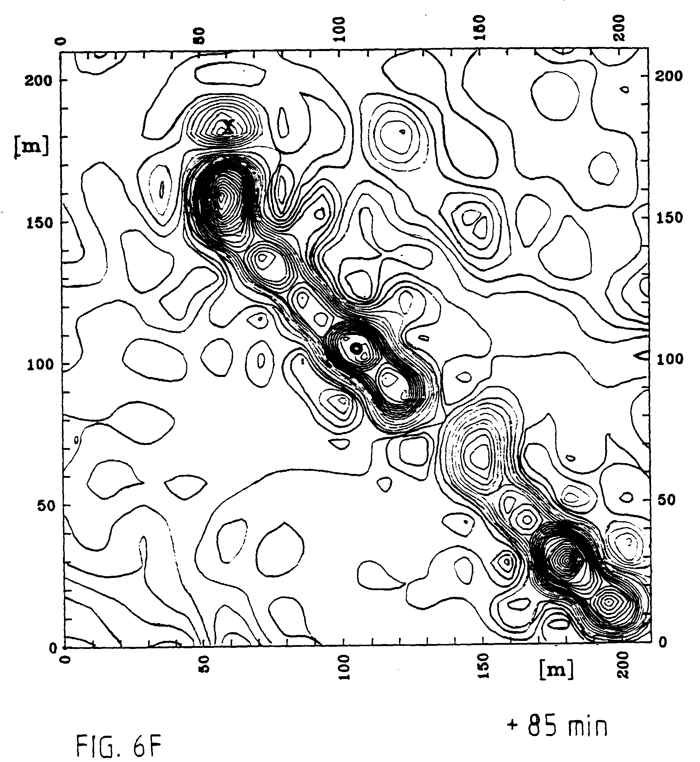

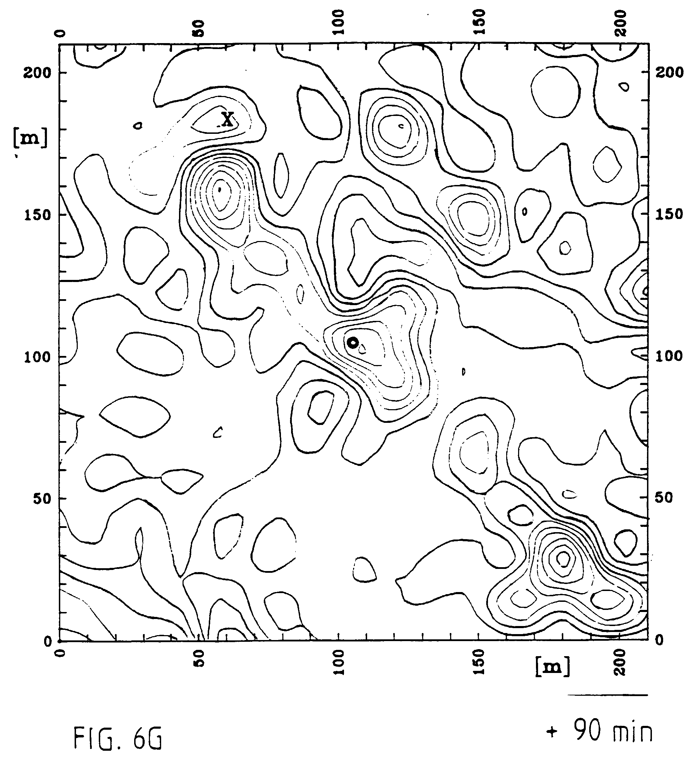

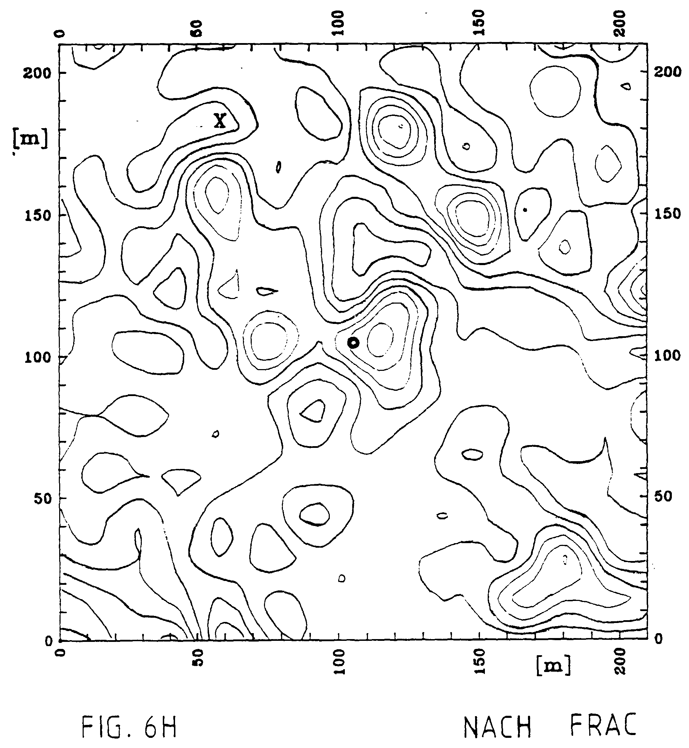

Gemäß Fig. 6D zeigt sich nach 25 Min. eine ausgeprägte Orientierung der Potentialwerte, die bis zu einer Zeit von 85 Min. anhält (Fig. 6E, 6F). Nach 90 Min. (Fig. 6G) verändert sich die Darstellung wieder in Richtung ihres ursprünglichen Zustands (Fig. 6H).

Die Erfindung kann nicht nur zur Erkundung von Fracrichtungen und - ausdehnungen verwendet werden, sondern eignet sich ferner zur Erkundung von Erzlagerstätten, zur Untersuchung von Dämmen und Deichen auf Dichtigkeit, zur Konturierung von kontaminierten Grundwasser im Abstrombereich von und in Deponien, zur Erkundung von Kontaminationsherden in Böden, zur Bestimmung des Gas/Salzwasserkontaktes von Gasspeichern und anderen die Potentialwerte an der Oberfläche beeinflussenden Untergrundereignissen.

Aus den ermittelten Daten lassen sich vielfältige Ergebnisse extrahieren, da sämtliche Daten in digitaler Form gespeichert vorliegen. Es können insbesondere statische Parameter wie Mittelwert, Streuung, Standardabweichung (für jede Sonde), Kontruierung von Potentialanomalien usw. festgestellt werden. Ferner können einzelne Sondenprofile aus der Gesamt-Meßkonfiguration ausgewählt werden. Verschiedene Interpolationsverfahren erlauben eine Gitternetz-Erzeugung. Die Darstellung kann in Form von Isolinienkarten oder 3D-Darstellungen vorgenommen werden. Die Darstellung kann sowohl in Echtzeit als auch nachträglich durchgeführt werden.

Die Ergebnisse können auf bestimmte Sonden, bestimmte Zeitpunkte oder bestimmte Potentialwerte normiert werden.

Für die verwendeten Rechner können handelsübliche Einheiten, beispielsweise Rechner auf Basis von 68.000-Prozessoren, verwendet werden.

## Patentansprüche

1. Geophysikalisches Verfahren zur Überwachung eines Gebietes mit Hilfe von in einem Raster angeordneten nichtpolarisierbaren in Gruppen angeordneten Meßsonden (12) zur Ermittlung des Eigenpotentials bezüglich einer Basissonde (13), wobei die Meßwerte der Meßsonden (12) zyklisch abgefragt werden, und zusätzlich der Erdwiderstand (35) zwischen wenigstens einer Meßsonde (12) und der Basissonde (13) zyklisch ermittelt wird, und bei dem die Messung des Erdwiderstandes (35) jeweils unmittelbar vor oder nach einer Messung der Eigenpotentiale stattfindet, wobei die Messungen des Erdwiderstandes und der Eigenpotentiale jeweils zwischen denselben Sondenpaaren erfolgt und die Abfragezeit jeder Gruppe von Meßsonden 0,5 msec. beträgt.

2. Verfahren nach Anspruch 1, bei dem die Meßsonden (12) in parallel zueinander liegenden Gruppen entlang von Meßlinien angeordnet sind, wobei jede Gruppe 16 Meßsonden (12) enthält.

3. Verfahren nach Anspruch 2, bei dem jeder Gruppe von Meßsonden (12) eine Speichereinheit (8, 10) zugeordnet ist, in der die gleichzeitig erfaßten und analog an die Speichereinheit übertragenen Potentialwerte der Meßsonden (12) der zugehörigen Gruppe zwischengespeichert werden, und bei dem die Messung des Erdwiderstandes (35) zeitlich zwischen zwei aufeinanderfolgenden Messungen der Eigenpotentiale erfolgt, wobei die bezüglich jeder Meßsonde ermittelten Erdwiderstände (35) analog auf die Speichereinheit (8, 10) übertragen und zwischengespeichert werden, und die zwischengespeicherten Daten aller Gruppen nach Analog/Digital-Wandlung zyklisch von einer Zentraleinheit (44) abgefragt werden.

4. Verfahren nach Anspruch 3, bei dem die Eigenpotentiale in der Speichereinheit einer Frequenzfilterung (41) unterworfen werden.

5. Verfahren nach Anspruch 1, bei dem die Zykluszeit zur Abfrage der Speichereinheiten von der Zentraleinheit <10 sec. beträgt.

6. Verfahren nach Anspruch 1, bei dem die Messung des Erdwiderstandes (35) durch Anlegen einer Spannung (33) zwischen Basissonde (13) und Meßsonde (12) und Feststellung der an einem Meßwiderstand (38) abfallenden Spannung erfolgt.

7. Verfahren nach irgendeinem der vorhergehenden Ansprüche, bei dem aus dem Verhältnis von Eigenpotential und Erdwiderstand jeder Meßsonde (12) Stromdaten für einen Zeitpunkt ermittelt und in Form von Isolinien auf einer das Gebiet zeigenden Karte dargestellt werden.

## Claims

1. Geophysical method for monitoring an area with the aid of measurement probes (12), which are arranged in a grid, cannot be polarized and are arranged in groups, in order to determine the self potential with respect to a base probe (13), the measurements of the measurement probes (12) being interrogated cyclically and, in addition, the earth resistance (35) between at least one measurement probe (12) and the base probe (13) being determined cyclically, and in the case of which the measurement of the earth resistance (35) is in each case carried out directly before or after a measurement of the self potentials, the measurements of the earth resistance and of the self potentials, in each case being carried out between the same probe pairs and the interrogation time for each group of measurement probes being 0.5 ms.

2. Method according to Claim 1, in which the measurement probes (12) are arranged in mutually parallel groups along measurement lines, each group containing 16 measurement probes (12).

3. Method according to Claim 2, in which wherein each group of measurement probes (12) is allocated a memory unit (8, 10) in which the potential values, which are detected simultaneously and are transmitted in analogue form to the memory unit, of the measurement probes (12) of the associated group are buffer-stored, and in which the earth resistance (35) is measured at a time between two successive measurements of the self potentials, the earth resistances (35) determined with respect to each measurement probe being transmitted in analogue form to the memory unit (8, 10) and are bufferstored, and the buffer-stored data of all groups being interrogated cyclically, by a central processor unit (44), after analogue/digital conversion.

4. Method according to Claim 3, in which the self potentials in the memory unit are subjected to frequency filtering (41).

5. Method according to Claim 1, in which the cycle time for interrogation of the memory units by the central processor unit is <10 s.

6. Method according to Claim 1, in which the earth resistance (35) is measured by applying a voltage (33) between the base probe (13) and the measurement probe (12) and by detecting the voltage dropped on a measurement resistor (38).

7. Method according to any one of the preceding claims, in which current data for a point in time are determined from the ratio of the self potential to the earth resistance of each measurement probe (12) and are presented in the form of iso-lines on a map showing the area.

## Revendications

1. Procédé géophysique pour surveiller une zone à l'aide de sondes de mesure (12) non polarisables qui sont groupées et disposées en un réseau et qui sont destinées à déterminer le potentiel propre par rapport à une sonde de base (13), selon lequel les valeurs mesurées des sondes de mesure (12) sont lues de manière cyclique et la résistance de la terre (35) est déterminée en supplément de manière cyclique entre au moins une sonde de mesure (12) et la sonde de base (13), et selon lequel la mesure de la résistance de la terre (35) a lieu à chaque fois juste avant ou après une mesure des potentiels propres, la mesure de la résistance de la terre et des potentiels propres ayant lieu à chaque fois entre les mêmes paires de sondes, et la durée de lecture pour chaque groupe de sondes de mesure étant de 0,5 ms.

2. Procédé selon la revendication 1, selon lequel les sondes de mesure (12) sont disposées par groupes parallèles, le long de lignes de mesure, chaque groupe contenant 16 sondes de mesure (12).

3. Procédé selon la revendication 2, selon lequel on associe à chaque groupe de sondes de mesure (12) une unité de mémoire (8, 10) dans laquelle sont stockées temporairement les valeurs de potentiel des sondes de mesure (12) du groupe associé qui ont été enregistrées en même temps et transmises par voie analogique à l'unité de mémoire, et selon lequel la mesure de la résistance de la terre (35) a lieu, dans le temps, entre deux mesures successives des potentiels propres, étant précisé que les résistances de la terre (35) déterminées par rapport à chaque sonde de mesure sont transmises par voie analogique à l'unité de mémoire (8, 10) et stockées temporairement, et que les données stockées temporairement de tous les groupes sont lues de manière cyclique par une unité centrale (44) après une conversion analogique/numérique.

4. Procédé selon la revendication 3, selon lequel les potentiels propres contenus dans l'unité de mémoire sont soumis à un filtrage de fréquences (41).

5. Procédé selon la revendication 1, selon lequel le temps de cycle pour la lecture des unités de mémoire par l'unité centrale est < 10 s.

6. Procédé selon la revendication 1, selon lequel la mesure de la résistance de la terre (35) a lieu grâce à l'application d'une tension (33) entre la sonde de base (13) et une sonde de mesure (12), et à la détermination de la baisse de tension au niveau d'une résistance de mesure (38).

7. Procédé selon l'une quelconque des revendications précédentes, selon lequel on détermine à partir du rapport du potentiel propre et de la résistance de la terre de chaque sonde de mesure (12) des données de courant pour un moment et on les représente sous la forme de lignes isométriques sur une carte montrant la zone.
